# EUROPEAN PATENT SPECIFICATION

(11) **EP 3 296 209 B1**
(45) Date of publication and mention of the grant of the patent: **19.05.2021**
(21) Application number: 16792022.2
(22) Date of filing: 18.04.2016
(51) Int. Cl.: B64D 17/04, B64D 17/06, B64B 1/48, B64D 1/12, B64D 17/34, B64D 17/72, B64D 17/74, B64D 17/78

(54) **COAXIAL TWO-LAYERED PARACHUTE**
ZWEILAGIGER KOAXIALER FALLSCHIRM
PARACHUTE À DEUX COUCHES COAXIAL

(30) Priority: 08.05.2015 CN 201510232120
(43) Date of publication of application: 21.03.2018
(73) Proprietor: Liao, Shueh-Chih, Taichung City 406 (TW)
(72) Inventor: Liao, Shueh-Chih, Taichung City 406 (TW)
(74) Representative: Lang, Christian
(86) International application number: PCT/CN2016/079558
(87) International publication number: WO 2016/180172

(56) References cited:
- CA-A1- 2 174 123
- CN-U- 203 315 570
- FR-A- 1 073 782
- GB-A- 555 831
- GB-A- 855 977
- GB-A- 855 977
- JP-A- H09 315 394
- TW-A- 201 404 664
- US-A- 3 679 155
- US-A1- 2011 290 944

## Description

### BACKGROUND

### Field of the Invention

The present invention relates to a parachute, and more particularly to a coaxial two-layered parachute which can be deployed with less height difference and without requiring complicated operation.

### Description of the Prior Art

A parachute is an aerodynamic decelerator which is fixed to a bearing article by a connecting member. The parachute can be deployed to slow down the falling speed of the bearing article by creating a drag.

Conventional parachute systems are known from the prior art, such as US 3,679, 155 A, GB 855 977 A and CN 203 315 570 U. US 3,679,155 A discloses a parachute system including the combination of an inflatable balloon and a conventional basically semi-spherical outer parachute body, wherein, in use, the inflatable balloon can be inflated by an inflator. The parachute disclosed in GB 855977 A has an upper parachute cloth and a lower parachute cloth which are air-tightly connected and in communication with the outside air through openings formed on the lower parachute cloth. CN 203315570U relates to an escaping parachute without limiting height, which comprises a parachute cloth, parachute ropes, parachute ribs, a control sleeve, a main control rod, a connecting portion and a parachute rope fixing ring.However, the deployment of such a parachute requires a certain height difference and relatively complicated manual operation.

The present invention has arisen to mitigate and/or obviate the afore-described disadvantages.

### SUMMARY

The primary objective of the present invention is to provide a coaxial two-layered parachute which can be deployed with less height difference and without requiring complicated operation.

To achieve the above objective, a coaxial two-layered parachute as set out in claim 1 is provided.

The inner layer of inflation sac body is filled with helium to generate a first buoyance, which will make the inner layer of inflation sac body float to a certain height since helium is much lighter than air. When the bearing article connected to the inner layer of inflation sac body and the outer layer of parachute cover falls, the ambient airflow will come into the inflation space via the air inlets to produce a second buoyance, which makes the outer layer of parachute cover open completely. Hence, the coaxial two-layered parachute of the present invention can be deployed with less height difference, and the outer layer of parachute cover can be opened automatically without requiring complicated manual operation.

Preferably, the inner layer of inflation sac body is provided with a plurality of flexible pieces around an outer surface of the inner layer of inflation sac body, and the plural flexible pieces are connected therebetween to provide support between the inner layer of inflation sac body and the outer layer of parachute cover, so as to prevent the swing and tilt of the inner layer of inflation sac body and the outer layer of parachute cover during the descent of the parachute.

Preferably, the inner layer of inflation sac body is provided with a guide portion in the form of an arc-shaped surface to guide airflows into the air inlets.

Preferably, the bottom surface of the outer layer of parachute cover is a plastic ring provided with the plurality of air inlets and disposed between the inner layer of inflation sac body and a lower end of the outer layer of parachute cover to provide more tensile strength.

As set out in claim 1, the outer layer of parachute cover takes the form of a downward tapered surface which can balance the air pressure between the inner and outer sides of the outer layer of parachute cover, and reduce unexpected swing during the descent of the parachute.

### BRIEF DESCRIPTION OF THE DRAWINGS

Fig. 1 is a perspective view of a coaxial two-layered parachute in accordance with a first embodiment of the present invention;
Fig. 2 is a plan view of the coaxial two-layered parachute in accordance with the first embodiment of the present invention;
Fig. 3 is another plan view of the coaxial two-layered parachute in accordance with the first embodiment of the present invention;
Fig. 4 is a perspective view of a coaxial two-layered parachute in accordance with a second embodiment of the present invention;
Fig. 5 is a plan view of the coaxial two-layered parachute in accordance with the second embodiment of the present invention; and
Fig. 6 is another plan view of the coaxial two-layered parachute in accordance with the second embodiment of the present invention.

**Symbol description of the drawings :**

| | |
|---|---|
| coaxial two-layered parachute 10 | inflation sac body 20 |
| guide portion 21 | arc-shaped surface 210 |
| restricting cord 22 | flexible piece 23 |
| outer layer of parachute cover 30 | tapered surface 300 |
| inflation space 31 | bottom surface 32 |
| air inlet 320, 51 | air bleed hole 33 |
| connecting cord 34 | fixing ring 340 |
| airflow 40 | plastic ring 50 |
| bearing article T | coaxial centreline H |
| buoyance F, F1 | |

### DETAILED DESCRIPTION

The present invention will be clearer from the following description when viewed together with the accompanying drawings, which show, for purpose of illustrations only, the preferred embodiment in accordance with the present invention.

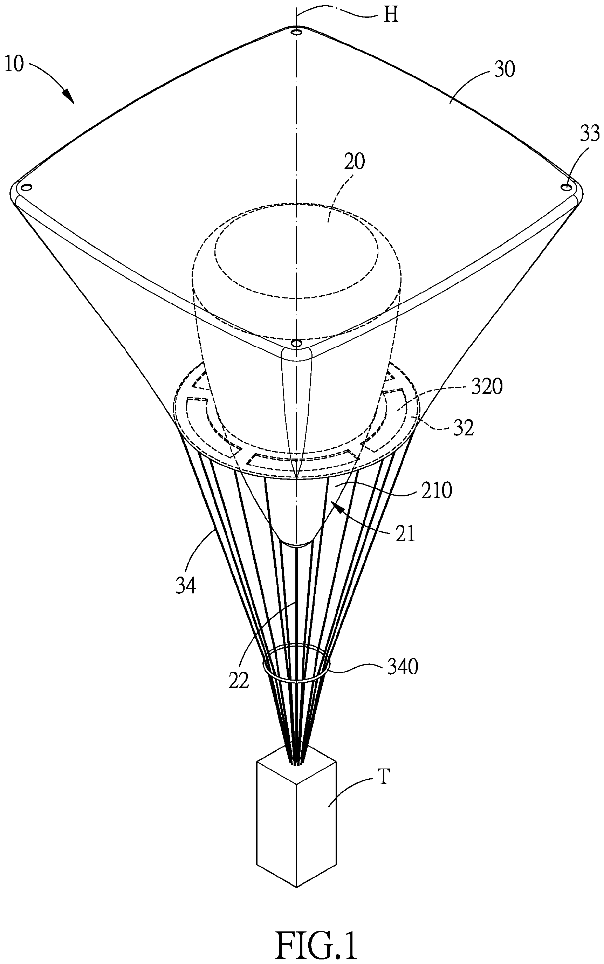

Referring to Fig. 1, a coaxial two-layered parachute 10 in accordance with a first embodiment of the present invention comprises: an inner layer of inflation sac body 20 and an outer layer of parachute cover 30. The inner layer of inflation sac body 20 is filled with helium and includes a guide portion 21 located adjacent to the end of the inner layer of inflation sac body 20. The guide portion 21 includes an arc-shaped surface 210. A restricting cord 22 has one end connected to a bottom of the guide portion 21, and another end connected to a bearing article T.

The outer layer of parachute cover 30 covers the inner layer of inflation sac body 20 which is disposed inside the outer layer of parachute cover 30. Between the outer layer of parachute cover 30 and the inner layer of inflation sac body 20 is defined an inflation space 31. The outer layer of parachute cover 30 includes a bottom surface 32 which is located adjacent to the guide portion 21 and connected to the inner layer of inflation sac body 20 and provided with plural air inlets 320 which are annularly arranged. At four corners of the top surface of the outer layer of parachute cover 30 is formed an air bleed hole 33, and to the bottom surface 32 are connected plural connecting cords 34 which are arranged in an annular fashion. Each of the connecting cords 34 has one end connected to the bottom surface 32 and another end connected to the bearing article T. Around the connecting cords 34 is disposed a fixing ring 340 which is located adjacent to the bearing article T.

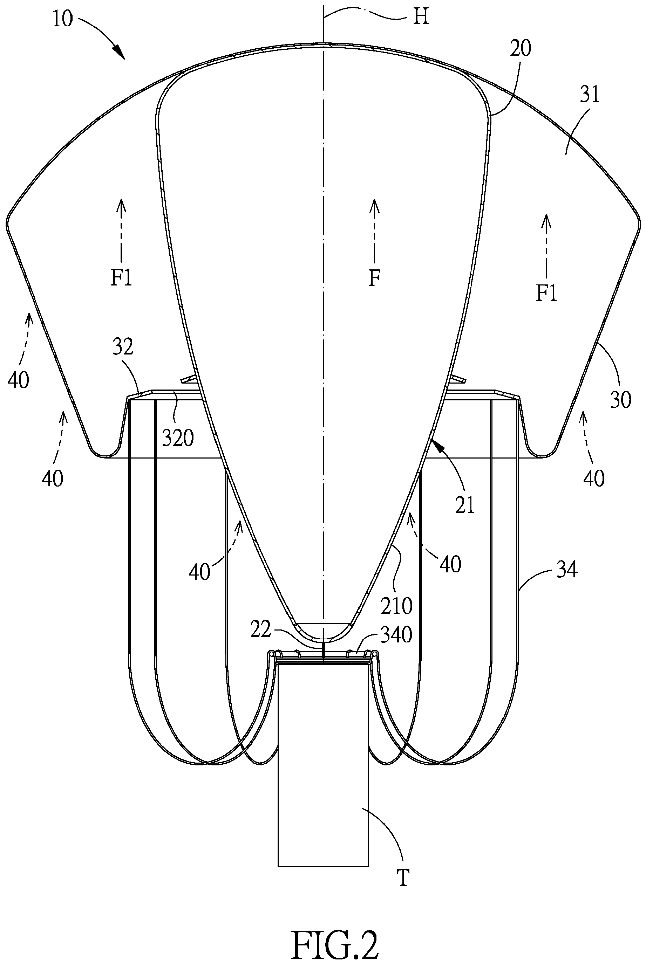

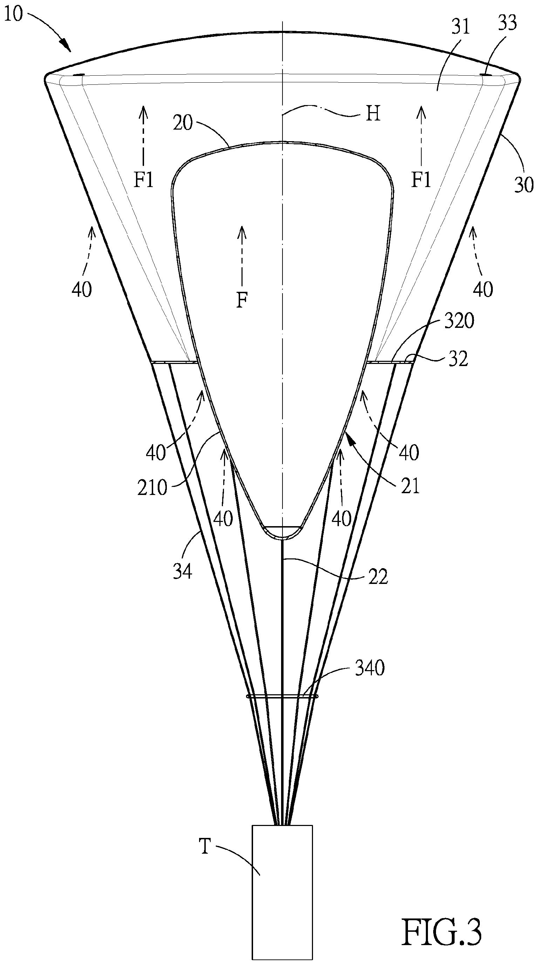

Referring then to Figs. 2 and 3, the inner layer of inflation sac body 20 and the outer layer of parachute cover 30 are coaxially arranged on an coaxial centreline H of the coaxial two-layered parachute 10, and the inner layer of inflation sac body 20 is filled with helium to generate a first buoyance F, which will make the inner layer of inflation sac body 20 float to a certain height since helium is much lighter than air. When the bearing article T connected to the inner layer of inflation sac body 20 and the outer layer of parachute cover 30 falls, the ambient airflow 40 will come into the inflation space 31 via the air inlets 320 to produce a second buoyance F1, which makes the outer layer of parachute cover 30 open completely. Meanwhile, the restricting cord 22 and the connecting cords 34 connected to the inner layer of inflation sac body 20 and the outer layer of parachute cover 30 will be pulled tight. When the restricting cord 22 is pulled tight, the inner layer of inflation sac body 20 will be restricted at the coaxial centreline H without swinging uncontrobably, so that the first buoyance F of the inner layer of inflation sac body 20 can be precisely applied at the coaxial centreline H to prevent tilt of the inner layer of inflation sac body 20.

When the first buoyance F makes the inner layer of inflation sac body 20 float, and the coaxial two-layered parachute 10 falls, the bearing article T connected by the restricting cord 22 and the connecting cords 34 has a certain weight, which will make the coaxial two-layered parachute 10 fall in a free fall manner. At the same time, plural airflows 40 will be produced in different directions, and the airflows 40 can be guided by the arc-shaped surface 210 of the guide portion 21 of the inner layer of inflation sac body 20 through the air inlets 320 at the bottom surface 32 of the outer layer of parachute cover 30 into the inflation space 31, so as to produce the second buoyance F1, which makes the parachute open completely.

Therefore, the coaxial two-layered parachute 10 of the present invention can be deployed with less height difference, and the outer layer of parachute cover 30 can be opened automatically without requiring complicated manual operation. In addition, the connecting cords 34 connected to the bottom of the outer layer of parachute cover 30 can be restricted by the fixing ring 340, so that the connecting cords 34 can be pulled tight and prevented from tangling together.

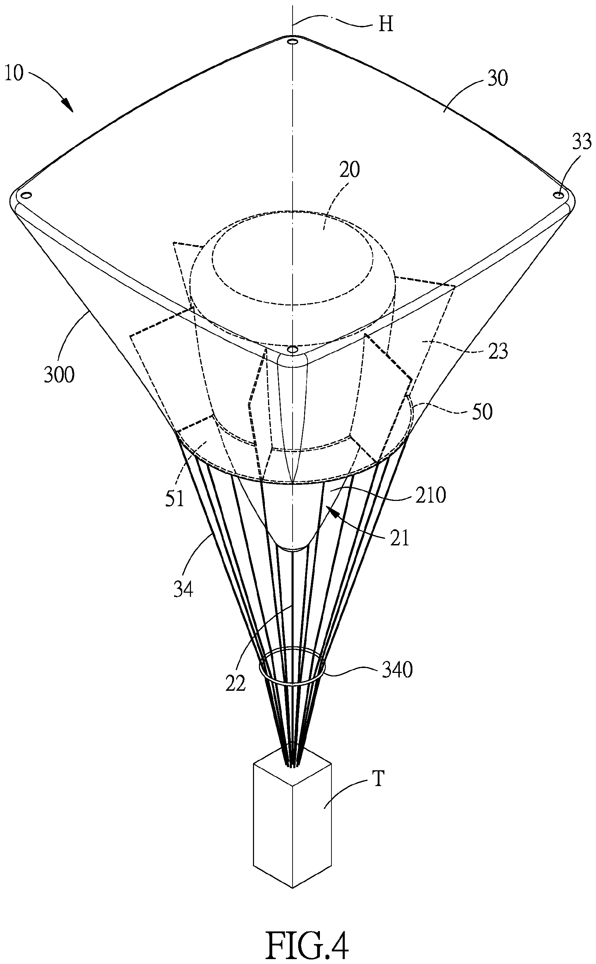

Referring then to Fig. 4, a coaxial two-layered parachute 10 in accordance with a second embodiment of the present invention comprises: an inner layer of inflation sac body 20, an outer layer of parachute cover 30 and a plastic ring 50.

The inner layer of inflation sac body 20 is filled with helium and provided with a plurality of flexible pieces 23 around the outer surface of the inner layer of inflation sac body 20, and a guide portion 21 at the end of the inner layer of inflation sac body 20. The guide portion 21 includes an arc-shaped surface. A restricting cord 22 has one end connected to a bottom of the guide portion 21, and another end connected to a bearing article T.

The outer layer of parachute cover 30 covers the inner layer of inflation sac body 20 which is disposed inside the outer layer of parachute cover 30. Between the outer layer of parachute cover 30 and the inner layer of inflation sac body 20 is defined an inflation space 31. At four corners of the top surface of the outer layer of parachute cover 30 is formed an air bleed hole 33, and to the bottom surface of the outer layer of parachute cover 30 are connected plural connecting cords 34 which are arranged in an annular fashion. Each of the connecting cords 34 has one end connected to the outer layer of parachute cover 30 and another end connected to the bearing article T. At around the connecting cords 34 is disposed a fixing ring 340 which is located adjacent to the bearing article T.

The plastic ring 50 made of rigid material is disposed between the inner layer of inflation sac body 20 and a lower end of the outer layer of parachute cover 30, and provided with a plurality of air inlets 51 which are annularly arranged.

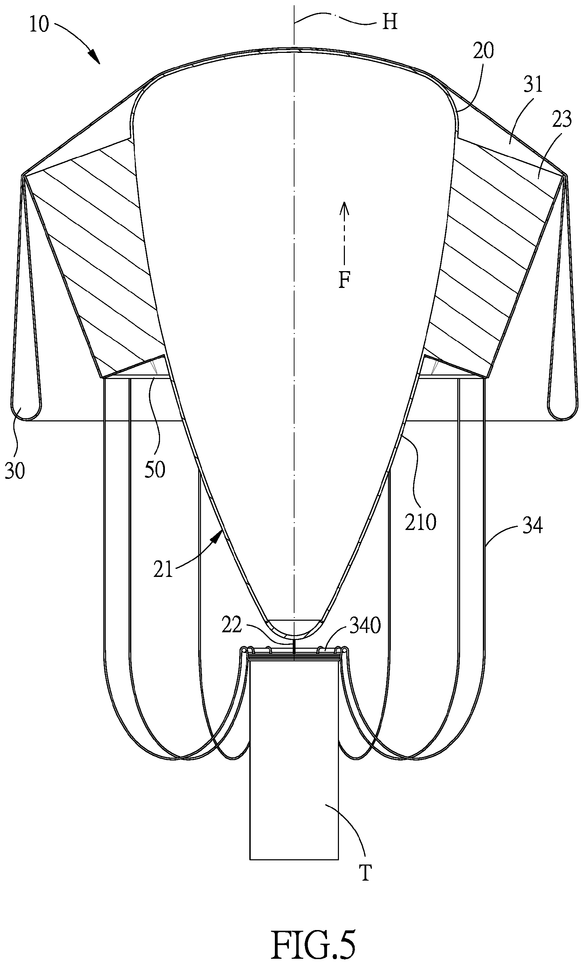

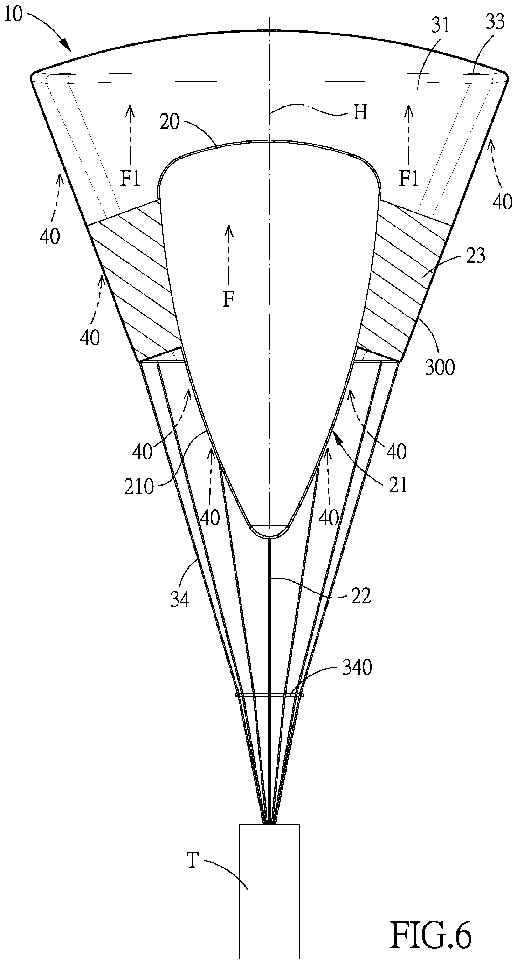

Referring then to Figs. 5 and 6, the inner layer of inflation sac body 20 and the outer layer of parachute cover 30 are coaxially arranged on the coaxial centreline H of the coaxial two-layered parachute 10, the inner layer of inflation sac body 20 is disposed in the outer layer of parachute cover 30, and the plastic ring 50 is disposed between the inner layer of inflation sac body 20 and a lower end of the outer layer of parachute cover 30. With the rigid plastic ring 50, the outer layer of parachute cover 30 covers and can be connected to the inner layer of inflation sac body 20. Besides, the inner layer of inflation sac body 20 has the plural flexible pieces 23 connected to the inner surface of the outer layer of parachute cover 30, so that the outer layer of parachute cover 30 can be smoothly deployed, and the deployed outer layer of parachute cover 30 has a downward tapered surface 300.

Since the inner layer of inflation sac body 20 is filled with helium to generate a first buoyance F, which will make the inner layer of inflation sac body 20 float to a certain height since helium is much lighter than air. When the bearing article T connected to the inner layer of inflation sac body 20 and the outer layer of parachute cover 30 falls, the ambient airflow 40 will come into the inflation space 31 via the air inlets 320 to produce a second buoyance F1, which makes the outer layer of parachute cover 30 open completely.

It is to be noted that the inner layer of inflation sac body 20 has the plural flexible pieces 23 connected to the inner surface of the outer layer of parachute cover 30, so that the outer layer of parachute cover 30 can be evenly supported and smoothly deployed, and the inner layer of inflation sac body 20 can be kept equidistantly from the outer layer of parachute cover 30. As a result, air pressure can be evenly applied in the inflation space 31 between the inner layer of inflation sac body 20 and the outer layer of parachute cover 30.

In summary, the coaxial two-layered parachute in accordance with the present invention has the following advantages:
First of all, the inner layer of inflation sac body 20 is pre-filled with helium, before the parachute 10 lands, the first buoyance F will make the inner layer of inflation sac body 20 float to a certain height to pull tight the restricting cord 22 and the connecting cords 34. When the inner layer of inflation sac body 20 floats to a certain height, the ambient airflow 40 will come into the inflation space 31 via the air inlets 320 to produce the second buoyance F1, and make the outer layer of parachute cover 30 open completely, so that the coaxial two-layered parachute 10 of the present invention can be deployed with less height difference, and the outer layer of parachute cover 30 can be opened automatically without requiring complicated manual operation.
Secondly, the inner layer of inflation sac body 20 and the outer layer of parachute cover 30 are located at the same coaxial centreline H, and can therefore be maintained at the coaxial position, no matter how the first and second buoyancies F, F1, or the airflows 40 or the air pressure are exerted. The plural flexible pieces 23 provide support between the inner layer of inflation sac body 20 and the outer layer of parachute cover 30, so as to prevent the swing and tilt of the inner layer of inflation sac body 20 and the outer layer of parachute cover 30 during the descent of the parachute 10.

Moreover, the air bleed holes 33 are formed at four corners of the top surface of the outer layer of parachute cover 30 to allow for smooth passage of the airflows 40, which reduce unexpected swing during the descent of the parachute 10.

Further, the deployed outer layer of parachute cover 30 has a downward tapered surface 300, the airflows 40 from different directions can be guided up to the inner and outer surfaces of the outer layer of parachute cover 30, so as to make the outer layer of parachute cover 30 land more stably.

Finally, the plastic ring 50 is made of light but rigid material and therefore won't be deformed no matter when the parachute is opened or closed. The air inlets 51 of the plastic ring 50 allow the airflows 40 to come into the inflation space 31 more smoothly and effectively, to produce an air inflation effect.

While we have shown and described various embodiments in accordance with the present invention, it is clear to those skilled in the art that further embodiments may be made without departing from the scope of the present invention as defined by the appended claims.

## Claims

1. A coaxial two-layered parachute (10) comprising an inflation sac body (20) defining an inner layer and a parachute cover (30) defining an outer layer, wherein the inner layer of the inflation sac body (20) and the outer layer of the parachute cover (30) are coaxially arranged with respect to a coaxial centerline (H);
wherein the inner layer of the inflation sac body (20) is filled with helium and includes a guide portion (21);wherein the outer layer of parachute cover (30) covers a part of the inner layer of the inflation sac body (20) which is disposed inside the outer layer of parachute cover (30), wherein the outer layer of parachute cover (30) includes a bottom surface (32, 50) which is located adjacent to the guide portion (21) and connected to the inner layer of the inflation sac body (20), so that an inflation space (31) is defined between the outer layer of the parachute cover (30), the bottom surface (32, 50) thereof and the inner layer of the inflation sac body (20), wherein the bottom surface (32, 50) is provided with plural air inlets (320, 51) which are annularly arranged, and wherein the outer layer of parachute cover (30) has a downward tapered surface (300).

2. The coaxial two-layered parachute (10) as claimed in claim 1, wherein the bottom surface (32) is a plastic ring (50) which is provided with the plurality of annularly arranged air
inlets (51).

3. The coaxial two-layered parachute (10) as claimed in claim 1, wherein the inner layer of inflation sac body (20) is provided with a plurality of flexible pieces (23) around an outer surface of the inner layer of inflation sac body (20), wherein the guide portion (21) is provided at one end of the inner layer of inflation sac body (20), and wherein the coaxial two-layered parachute (10) further comprises a restricting cord (22) having one end connected to a bottom of the guide portion (21) and another end connectable to a bearing article (T).

4. The coaxial two-layered parachute (10) as claimed in claim 1, wherein an air bleed hole (33) is formed at each of four corners of the top surface of the outer layer of parachute cover (30), wherein the coaxial two-layered parachute (10) further comprises a plurality of connecting cords (34) connected to the bottom surface (32) of the outer layer of parachute cover (30) and arranged in an annular fashion, and wherein each of the connecting cords (34) has one end connected to the bottom surface (32) and another end connectable to a bearing article (T).

5. The coaxial two-layered parachute (10) as claimed in claim 2, wherein the plastic ring (50) is made of rigid material.

6. The coaxial two-layered parachute (10) as claimed in claim 3, wherein the guide portion (21) includes an arc-shaped surface (210).

7. The coaxial two-layered parachute (10) as claimed in claim 4, further comprising a fixing ring (340) disposed around the connecting cords (34) and adapted to be located adjacent to the bearing article (T).

## Patentansprüche

1. Zweilagiger koaxialer Fallschirm (10), umfassend einen aufblasbaren Sackkörper (20), der eine innere Lage definiert, und eine Fallschirmabdeckung (30), die eine äußere Lage definiert, wobei die innere Lage des aufblasbaren Sackkörpers (20) und die äußere Lage der Fallschirmabdeckung (30) koaxial in Bezug auf eine koaxiale Mittellinie (H) angeordnet sind,
wobei die innere Lage des aufblasbaren Sackkörpers (20) mit Helium gefüllt ist und einen Führungsabschnitt (21) beinhaltet, wobei die äußere Lage der Fallschirmabdeckung (30) einen Teil der inneren Lage des aufblasbaren Sackkörpers (20) bedeckt, der innerhalb der äußeren Lage der Fallschirmabdeckung (30) angeordnet ist, wobei die äußere Lage der Fallschirmabdeckung (30) eine untere Fläche (32, 50) aufweist, die benachbart zu dem Führungsabschnitt (21) angeordnet und mit der inneren Lage des aufblasbaren Sackkörpers (20) verbunden ist, sodass ein aufblasbarer Raum (31) zwischen der äußeren Lage der Fallschirmabdeckung (30), der unteren Fläche (32, 50) davon und der inneren Lage des aufblasbaren Sackkörpers (20) definiert ist,
wobei die untere Fläche (32, 50) mit mehreren Lufteinlässen (320, 51) bereitgestellt ist, die ringförmig angeordnet sind, und wobei die äußere Lage der Fallschirmabdeckung (30) eine sich nach unten verjüngende Fläche (300) aufweist.

2. Zweilagiger koaxialer Fallschirm (10) nach Anspruch 1, bei welchem die untere Fläche (32) ein Kunststoffring (50) ist, der mit den mehreren ringförmig angeordneten Lufteinlässen (51) bereitgestellt ist.

3. Zweilagiger koaxialer Fallschirm (10) nach Anspruch 1, bei welchem die innere Lage des aufblasbaren Sackkörpers (20) mit mehreren flexiblen Teilen (23) um eine äußere Fläche der inneren Lage des aufblasbaren Sackkörpers (20) herum bereitgestellt ist, wobei der Führungsabschnitt (21) an einem Ende der inneren Lage des aufblasbaren Sackkörpers (20) bereitgestellt ist, und wobei der zweilagige koaxiale Fallschirm (10) ferner eine Beschränkungsleine (22) umfasst, deren eines Ende mit einem Unterteil des Führungsabschnitts (21) verbunden ist und deren anderes Ende mit einem zu tragenden Gegenstand (T) verbindbar ist.

4. Zweilagiger koaxialer Fallschirm (10) nach Anspruch 1, bei welchem an jeder der vier Ecken der oberen Fläche der äußeren Lage der Fallschirmabdeckung (30) ein Entlüftungsloch (33) ausgebildet ist, wobei der zweilagige koaxiale Fallschirm (10) ferner mehrere Verbindungsleinen (34) umfasst, die mit der unteren Fläche (32) der äußeren Lage der Fallschirmabdeckung (30) verbunden und ringförmig angeordnet sind, und wobei jede der Verbindungsleinen (34) ein Ende, das mit der unteren Fläche (32) verbunden ist, und ein weiteres Ende, das mit einem zu tragenden Gegenstand (T) verbindbar ist, aufweist.

5. Zweilagiger koaxialer Fallschirm (10) nach Anspruch 2, bei welchem der Kunststoffring (50) aus starrem Material hergestellt ist.

6. Zweilagiger koaxialer Fallschirm (10) nach Anspruch 3, bei welchem der Führungsabschnitt (21) eine bogenförmige Fläche (210) aufweist.

7. Zweilagiger koaxialer Fallschirm (10) nach Anspruch 4, der ferner einen Befestigungsring (340) umfasst, der um die Verbindungsleinen (34) herum angeordnet und dazu ausgelegt ist, benachbart zu dem zu tragenden Gegenstand (T) angeordnet zu werden.

## Revendications

1. Parachute à deux couches coaxial (10) comprenant un corps de sac de gonflage (20) définissant une couche interne et une couverture de parachute (30) définissant une couche externe, dans lequel la couche interne du corps de sac de gonflage (20) et la couche externe de la couverture de parachute (30) sont agencées de manière coaxiale par rapport à une ligne médiane coaxiale (H);
dans lequel la couche interne du corps de sac de gonflage (20) est remplie d'hélium et inclut une partie de guidage (21); dans lequel la couche externe de la couverture de parachute (30) recouvre une partie de la couche interne du corps de sac de gonflage (20) qui est disposée à l'intérieur de la couche externe de la couverture de parachute (30), dans lequel la couche externe de la couverture de parachute (30) inclut une surface inférieure (32, 50) qui est située de manière adjacente à la partie de guidage (21) et reliée à la couche interne du corps de sac de gonflage (20), de sorte qu'un espace de gonflage (31) est défini entre la couche externe de la couverture de parachute (30), la surface inférieure (32, 50) de celle-ci et la couche interne du corps de sac de gonflage (20), dans lequel la surface inférieure (32, 50) est pourvue de plusieurs entrées d'air (320, 51) qui sont placées de manière annulaire, et dans lequel la couche externe de la couverture de parachute (30) a une surface effilée vers le bas (300).

2. Parachute à deux couches coaxial (10) selon la revendication 1, dans lequel la surface inférieure (32) est une bague en plastique (50) qui est pourvue de la pluralité d'entrées d'air placées de manière annulaire (51).

3. Parachute à deux couches coaxial (10) selon la revendication 1, dans lequel la couche interne du corps de sac de gonflage (20) est pourvue d'une pluralité de pièces flexibles (23) autour d'une surface externe de la couche interne du corps de sac de gonflage (20), dans lequel la partie de guidage (21) est placée à une extrémité de la couche interne du corps de sac de gonflage (20), et dans lequel le parachute à deux couches coaxial (10) comprend en outre un cordon de limitation (22) ayant une extrémité reliée à une partie inférieure de la partie de guidage (21), et une autre extrémité pouvant être reliée à un article d'appui (T).

4. Parachute à deux couches coaxial (10) selon la revendication 1, dans lequel un trou de purge d'air (33) est formé au niveau de chacun des quatre coins de la surface supérieure de la couche externe de la couverture de parachute (30), dans lequel le parachute à deux couches coaxial (10) comprend en outre une pluralité de cordons de liaison (34) reliés à la surface inférieure (32) de la couche externe de la couverture de parachute (30) et placés de manière annulaire, et dans lequel chacun des cordons de liaison (34) a une extrémité reliée à la surface inférieure (32) et une autre extrémité pouvant être reliée à un article d'appui (T).

5. Parachute à deux couches coaxial (10) selon la revendication 2, dans lequel la bague en plastique (50) est en matériau rigide.

6. Parachute à deux couches coaxial (10) selon la revendication 3, dans lequel la partie de guidage (21) inclut une surface en forme d'arc (210).

7. Parachute à deux couches coaxial (10) selon la revendication 4, comprenant en outre une bague de fixation (340) disposée autour des cordons de liaison (34) et adaptée pour être située de manière adjacente à l'article d'appui (T).
